Europäisches Patentamt

European Patent Office

Office européen des brevets

(19)

(11) Numéro de publication: **0 279 725**
**A1**

## (12) DEMANDE DE BREVET EUROPEEN

(21) Numéro de dépôt: 88400200.7

(22) Date de dépôt: 29.01.88

(51) Int. Cl.⁴: **C 08 G 18/63**
C 09 J 3/14, C 09 J 3/16

(30) Priorité: 30.01.87 FR 8701135
22.12.87 FR 8717905

(43) Date de publication de la demande:
24.08.88 Bulletin 88/34

(84) Etats contractants désignés:
AT BE CH DE ES FR GB GR IT LI LU NL SE

(71) Demandeur: SOCIETE NATIONALE ELF AQUITAINE
Société anonyme dite
Tour Elf 2, Place de la Coupole La Défense 6
F-92400 Courbevoie (FR)

(72) Inventeur: Truong, Dinh Nguyen
10, avenue du Général Leclerc
F-64000 Pau (FR)

(74) Mandataire: Boillot, Marc
SOCIETE NATIONALE ELF AQUITAINE Division
Propriété Industrielle Tour Elf
F-92078 Paris la Défense Cédex 45 (FR)

(54) Composition adhésive acrylique présentant après durcissement une résistance améliorée au cisaillement et son application à la liaison d'éléments et notamment d'éléments structuraux.

(57) Composition adhésive acrylique du type comportant une phase acrylique monomère et, en mélange intime avec cette dernière, un générateur de radicaux libres et un adjuvant améliorant la résistance au choc de la composition adhésive durcie et éventuellement d'autres additifs.

Ledit adjuvant consiste en un réseau polyuréthanne réticulé formé in situ au sein de la phase acrylique monomère à partir d'un système précurseur de polyuréthanne mis en solution dans ladite phase.

Cette composition adhésive, qui présente après durcissement une résistance améliorée au cisaillement, est utilisable entre autres pour la réalisation de collages structuraux.

EP 0 279 725 A1

**Description**

Composition adhésive acrylique présentant après durcissement une résistance améliorée au cisaillement et son application à la liaison d'éléments et notamment d'éléments structuraux

L'invention a trait à une composition adhésive acrylique présentant après durcissement une résistance améliorée au cisaillement. Elle se rapporte encore à l'application d'une telle composition à la liaison d'éléments et notamment d'éléments structuraux.

Dans divers domaines de l'industrie, des éléments structuraux en matériaux tels que métaux, matières plastiques, matériaux composites ou autres sont assemblés par collage en faisant appel à des compositions adhésives particulières appelées adhésifs structuraux.

De telles compositions adhésives consistent généralement en une solution d'un polymère à propriétés élastomériques dans une phase liquide à base d'un ou plusieurs monomères acryliques, ladite solution renfermant également un système susceptible de générer des radicaux libres lorsqu'il est en présence d'un activateur.

Le polymère à propriétés élastomériques est présent dans la composition adhésive soit en solution vraie soit le plus souvent en pseudo-solution, c'est à dire sous la forme de particules très finement divisées dans la phase liquide monomère conduisant à une solution du type solution colloidale, et il constitue dans l'adhésif durci une phase dissipatrice d'énergie, qui confère audit adhésif des propriétés améliorées de résistance au choc.

De nombreux polymères caoutchoutiques ont déjà été proposés pour constituer les polymères à propriétés élastomériques présents dans les compositions du type précité, parmi lesquels figurent en bonne place les cauoutchoucs polyuréthannes, qui sont des polyuréthannes non réactifs de hautes masses moléculaires possédant une nature élastomérique et ayant des chaînes sensiblement linéaires.

Les compositions adhésives susmentionnées, pour lesquelles le polymère à propriétés élastomériques qu'elles renferment en solution ou pseudo-solution est un caoutchouc polyuréthanne, ont des performances intéressantes aux températures pas trop élevées, généralement aux températures inférieures à 150°C, et conduisent notamment à une bonne résistance au choc de l'adhésif durci. Toutefois de telles compositions adhésives présentent encore certaines insuffisances pour la réalisation de collages pour lesquels le joint adhésif doit être soumis à des contraintes importantes de cisaillement. Ces insuffisances peuvent s'expliquer notamment par l'apparition de zones de séparation de phase entre les polymères souvent incompatibles formant le joint adhésif, lesdites zones constituant des zones de fragilisation du joint adhésif.

On a trouvé que l'on pouvait remédier à cet inconvénient en remplaçant le caoutchouc polyuréthanne de la composition adhésive par un réseau polyuréthanne réticulé formé in situ au sein des monomères acryliques par addition à ces derniers d'un système précurseur de polyuréthanne. Ceci conduit au cours du durcissement de l'adhésif à la création d'un réseau polyuréthanne réticulé à l'intérieur du réseau formé par les chaînes polymères résultant de la polymérisation du ou des monomères acryliques, avec comme résultat l'obtention d'un adhésif durci présentant une structure de réseaux polymères interpénétrés et possédant de ce fait une résistance améliorée au cisaillement en plus d'une excellente résistance au choc.

L'invention a donc pour objet une composition adhésive acrylique présentant après durcissement une résistance améliorée au choc et au cisaillement, ladite composition étant du type comportant une phase acrylique renfermant un ou plusieurs monomères monoacryliques et jusqu'à 10 % et de préférence de 0,5 à 5 %, en poids de ladite phase, d'un ou plusieurs esters pluriacryliques et, en mélange intime avec la phase monomère, un générateur de radicaux libres ainsi qu'un adjuvant d'amélioration de la résistance au choc de la composition adhésive durcie, et se caractérisant en ce que ledit adjuvant consiste en un réseau polyuréthanne réticulé formé in situ au sein de la phase acrylique monomère à partir d'un système précurseur de polyuréthanne mis en solution dans ladite phase monomère, ledit système précurseur étant utilisé à raison de 3 à 60 % et de préférence 5 à 25 % du poids de la phase acrylique monomère et étant formé d'un ou plusieurs isocyanates organiques polyfonctionnels et d'un ou plusieurs polyols, qui sont solubles chacun dans la phase acrylique monomère et sont choisis de telle sorte que ce système précurseur renferme au moins un isocyanate possédant au moins trois fonctions isocyanates ou/et un polyol ayant au moins trois fonctions hydroxyles pour conduire au polyuréthanne réticulé sans séparation de phases.

On peut former le système précurseur de polyuréthanne en associant un ou plusieurs isocyanates organiques renfermant au moins trois fonctions isocyanates à un ou plusieurs diols ou à un mélange d'un ou plusieurs diols et d'un ou plusieurs polyols renfermant au moins trois fonctions hydroxyles, la quantité du ou desdits polyols au moins trifonctionnels représentant au plus 60 % et de préférence entre 0,5 et 15 % du poids global du ou des diols du mélange.

On peut encore former le système précurseur de polyuréthanne en associant un ou plusieurs diisocyanates à un mélange d'un ou plusieurs diols et d'un ou plusieurs polyols renfermant au moins trois fonctions hydroxyles, la quantité du ou desdits polyols au moins trifonctionnels représentant au plus 60 % et de préférence entre 0,5 et 15 % du poids global du ou des diols du mélange, ou encore en associant un mélange d'un ou plusieur diisocyanates et d'un ou plusieurs isocyanates au moins trifonctionnels à un ou plusieurs diols.

Le ou les polyols entrant dans la composition du système précurseur de polyuréthanne sont des composés organiques qui renferment au moins deux groupements hydroxyles dans leurs molécules et ont une masse moléculaire comprise entre 60 et 200 000. Lesdits polyols peuvent être notamment des polyétherpolyols résultant de la réaction d'un ou plusieurs polyols de faible masse moléculaire, par exemple éthylène glycol, propylène glycol, butylène glycol, pentylène glycol, hexylène glycol, glycérol, triméthylolpropane, triméthyloléthane, pentaerythritol, dipentaerythritol, méthylglycoside, sorbitol et saccharose avec un ou plusieurs composés époxydes du type oxyde de propylène, oxyde d'éthylène ou encore des polyesterpolyols résultant de la réaction d'un ou plusieurs polyols micromoléculaires du type précité avec un ou plusieurs acides polycarboxyliques tels que les acides oxalique, malonique, succinique, glutarique, adipique, pimélique, subérique, azélaïque, sébacique, malique, phtaliques, cyclohexanedicarboxyliques,endométhylènetétrahydrophtaliques ou les anhydrides de tels acides. Peuvent être également utilisés des polyols azotés ou soufrés et notamment des polyestéramides ou polyétheresteramides hydroxylés en bouts de chaînes ou encore des alcoylènediamines ou des polyalcoylènepolyamines dont les atomes d'hydrogène fixés aux atomes d'azote sont remplacés par des restes hydroxyalcoyles comme, par exemple, hydroxyéthyles ou hydroxypropyles.

Conviennnent tout spécialement à titre de polyols, les polyétherdiols choisis parmi les polyoxyalcoylèneglycols tels que polyoxyéthylèneglycols, polyoxypropylèneglycols, polyoxytétraméthylèneglycols, polyoxypentaméthylèneglycols, polyoxyhexaméthylèneglycols, ayant une masse moléculaire moyenne en nombre ($\overline{M}n$) comprise entre 100 et 200 000 et de préférence entre 200 et 50 000, ainsi que les polyesterdiols aliphatiques tels que les polyadipates d'alcoylèneglycols ou d'oxyalcoylèneglycols ou les polycaprolactones ou les polyesterdiols aromatiques tels que les polytéréphtalates d'alcoylèneglycols ou d'oxyalcoylèneglycols ayant une masse moléculaire moyenne en nombre comprise entre 100 et 200 000 et de préférence entre 200 et 50 000.

Aux diols précités s'ajoutent également les polyols ayant au moins trois groupements hydroxyles dans la molécule, par exemple triméthylolpropane, triméthyloléthane, pentaérythritol, lesdits polyols étant utilisés en quantité globale représentant au plus 60% et de préférence entre 0,5 et 15 % du poids desdits diols, ces polyols jouant le rôle d'agents de réticulation.

Les isocyanates organiques polyfonctionnels, qui sont utilisés conjointement aux polyols, sont des composés organiques possédant au moins deux fonctions isocyanates dans leur molécule et ayant une masse moléculaire en nombre inférieure à 5 000. De tels isocyanates polyfonctionnels peuvent être des isocyanates aliphatiques non cycliques ou cycliques tels que diisocyanate-1, 6 hexane, isophorone diisocyanate, biuret triisocyanate, trimère de l'isophorone diisocyanate, diméryldiisocyanate, trimère du diisocyanatohexane, diisocyanato-4,4' dicyclohexylméthane,bis (isocyanatométhyl)-1,3 cyclohexane, ester méthylique de l'acide diisocyanato-2,6 hexanoïque ou encore des isocyanates aromatiques tels que diisocyanato-2,4 toluène, diisocyanato-2,6 toluène, diisocyanato-1,5 naphtalène diisocyanato-4,4,' diphényl-méthane, diisocyanato-2,4'diphénylméthane, diisocyanato-4,4'diphénylméthane carbodiimidisé ou urétha-nisé, triisocyanato-triphénylméthane, trimère du diisocyanato-2,4 toluène, uretdione de diisocyanato-2,4 toluène ou des acides diisocyanato-2,4 toluène sulfoniques, isocyanates polymères dérivés du diisocyanato-4,4' diphénylméthane. Les isocyanates organiques polyfonctionnels utilisables suivant l'invention peuvent être également choisis parmi les isocyanates prépolymères résultant de la réaction contrôlée d'un diisocyanate organique sur un polyol, par exemple adduct d'un diisocyanato toluène avec le triméthylolpropane.

La réaction de formation in situ du polyuréthanne entre le ou les polyols et le ou les isocyanates polyfonctionnels peut être initiée en présence de catalyseurs, que l'on peut choisir parmi les divers catalyseurs proposés dans ce but. Conviennent tout particulièrement les composés organiques métalliques ayant un caractère d'acide de LEWIS et plus spécialement les composés organiques de l'étain, notamment octoate d'étain, dilaurate de dibutylétain, bis dodécylmercaptide de dibutyl-étain.

Les proportions respectives du ou des polyols et du ou des isocyanates polyfonctionnels à utiliser pour constituer le système précurseur de polyuréthanne correspondent sensiblement à celles assurant une stoechiométrie entre les groupements isocyanates et les groupements hydroxyles, avec de préférence emploi d'un léger excès du ou des polyisocyanates par rapport à la stoechiométrie pour prévenir d'éventuelles réactions secondaires parasites avec certains monomères acryliques.

La quantité de catalyseur de la réaction de formation de polyuréthanne correspond à celle généralement préconisée pour cette réaction. Avantageusement ladite quantité peut représenter 0,1 à 5% et de préférence 0,5 à 3% du poids global du ou des polyols et du ou des isocyanates polyfonctionnels contenus dans le système précurseur de polyuréthanne.

Les monomères monoacryliques sont en particulier des esters, acides et nitriles acryliques et notamment des composés de formule générale $CH_2\!\!=\!\!\underset{\underset{R}{|}}{C}\text{-}Y$ dans laquelle R désigne un atome d'hydrogène ou un radical alcoyle en $C_1$ à $C_3$ et Y représente un groupement nitrile ou un reste - $COOR_2$ avec $R_2$ désignant un atome d'hydrogène ou un radical choisi parmi les radicaux monovalents renfermant jusqu'à 18 atomes de carbone et notamment parmi les radicaux alcoyles, aminoalcoyles, époxyalcoyles, hydroxyalcoyles et chloroalcoyles en $C_1$ à $C_{18}$, les radicaux cycloalcoyles ou hétérocycliques en $C_4$ à $C_{12}$ et les radicaux alcényles en $C_2$ à $C_{18}$. Des exemples de ces monomères sont tels que méthacrylate de méthyle, méthacrylate d'isobutyle, méthacrylate d'hexyle, méthacrylate de lauryle, acrylate d'éthyle, acrylate d'isobutyle, acrylate d'éthyl-2 hexyle, méthacrylate de glycidyle, acrylate de glycidyle, acrylonitrile ou méthacrylonitrile, acide acrylique ou méthacrylique, acrylate d'hydroxyéthyle, acrylate d'hydroxypropyle, méthacrylate d'hydroxyéthyle, méthacrylate d'hydroxypropyle.

Les monomères pluriacryliques, c'est-à-dire possédant au moins deux groupements acryliques dans la molécule, peuvent être choisis notamment parmi :
- les esters polyacryliques de polyols, qui sont définis dans US-A-3 218 305 et comprennent en particulier des diacrylates et diméthacrylates d'alcoylène tels que diacrylates ou diméthacrylates de tétraméthylène ou d'hexaméthylène ou des diacrylates et diméthacrylates de poly(alcoylèneglycol) tels que diméthacrylates ou diacrylates de diéthylèneglycol, de triéthylèneglycol, de tétraéthylèneglycol, de polyéthylèneglycol ou encore de dipropylène glycol, des triacrylates ou triméthacrylates tels que triacrylate ou triméthacrylate de triméthylolpropane, des tétracrylates ou tétraméthacrylates tels que tétracrylate et tétraméthacrylate de diglycérol. A ces esters acryliques de polyols peuvent encore s'ajouter des esters acryliques de polyols tels que tétracrylate et tétraméthacrylate de pentaerythritol ou même des pentacrylates et pentaméthacrylates tels que ceux de pentaerythritolmonohydroxy;
- les esters prépolymères à groupements acryliques terminaux préparés, comme décrit dans US-A-4018 851, en faisant tout d'abord réagir un polyoxyalcoylène polyol, sur lequel a été préalablement greffé un monomère vinylique, avec un excès molaire d'un polyisocyanate cycloaliphatique ou aromatique, puis en traitant le produit obtenu par un excès molaire d'un acrylate ou méthacrylate d'hydroxyalcoyle ou d'aminoalcoyle;
- les esters prépolymères à groupements acryliques terminaux préparés, comme décrit dans US-A-3 993 815, en traitant par un acrylate ou méthacrylate d'hydroxyalcoyle ou d'aminoalcoyle le produit de réaction d'un excès d'un isocyanate avec une polyamine à groupements aminés primaires ou secondaires ou un polyol ; et
- les monomères du type uréthanne/acrylate ou uréide/acrylate définis dans DE-A-2 324 822 et son correspondant CA-A-1 009 792 ou dans US-A-3 425 988 et résultant de la réaction d'un polyisocyanate avec un ester acrylique tel qu'un acrylate ou un méthacrylate dont le reste ester possède un groupement hydroxyle ou un groupement aminé primaire ou secondaire.

Des monomères insaturés non acryliques, polymérisables par voie radicalaire et exempts de groupements carboxyliques libres, peuvent être éventuellement présents dans la phase monomère en association avec les monomères acryliques. Ces monomères non acryliques sont notamment tels que styrène, alpha-méthylstyrène, divinylbenzène, indène, vinylpyrrolidone, acétate de vinyle.

La proportion des monomères insaturés non acryliques éventuellement présents dans la phase monomère n'excède pas 20% du poids global des monomères qu'elle renferme.

Suivant l'invention l'expression "monomères acryliques" comprend également les sirops formés de prépolymères de monomères acryliques.

La phase monomère peut également inclure un ou plusieurs promoteurs d'adhésion conventionnels, notamment composés tels que silanes, titanates ou encore phosphates polymérisables ou non comme les esters phosphoriques à groupements acryliques terminaux, qui sont solubles dans la phase monomère, la quantité de promoteur d'adhésion étant celle habituellement utilisée pour le composé choisi à cet effet.

Dans une forme préférée de réalisation, une fraction des monomères contenus dans la phase monomère consiste en un ou plusieurs acides insaturés monocarboxyliques ou polycarboxyliques polymérisables par voie radicalaire, notamment acide acrylique ou acide méthacrylique, lesdits acides insaturés mono-ou polycarboxyliques jouant, entre autres, le rôle de promoteurs d'adhésion. Cette fraction constituée d'acides carboxyliques insaturés représente avantageusement environ 1 à 80% et de préférence 5 à 50% du poids de la phase monomère.

Le générateur de radicaux libres, qui est présent dans la composition adhésive pour causer la polymérisation des monomères acryliques ou autres polymérisables par voie radicalaire, peut être choisi parmi les divers générateurs de radicaux libres connus solubles dans la phase monomère. Le générateur de radicaux libres peut consister notamment en un photo-initiateur, par exemple un composé choisi parmi la benzophénone, l'acétophénone, les acétonaphtones et les dérivés acryliques de tels produits, utilisé seul ou en association avec un photosensibilisateur, ledit générateur de radicaux libres fournissant des radicaux libres lorsqu'il est activé au moyen d'un rayonnement ultra-violet. Avantageusement le générateur de radicaux libres est un composé peroxydé, par exemple un hydroperoxyde tel que l'hydroperoxyde de cumène, un peroxyde comme le peroxyde de benzoyle, le peroxyde de dicumyle, le peroxyde de tertiobutyle cumyle, un peracide, un perester ou bien un persulfate ou encore un composé du type azobisnitrile tel que l'azobisisobutyronitrile, ledit générateur fournissant des radicaux libres soit par activation thermique seulement ou/et par association avec un composé activateur, par exemple une amine aromatique tertiaire telle que la diméthyl-paratoluidine ou la diisopropanol-paratoluidine ou encore un produit de réaction d'un aldéhyde tel que butyraldéhyde, acroléine ou homologue avec une amine telle que l'aniline ou la butylamine. Le générateur de radicaux libres du type composé peroxydé et le composé activateur associé peuvent être présents simultanément dans la composition adhésive lorsque la vitesse de génération des radicaux libres par l'association ainsi réalisée est suffisamment faible aux températures de stockage ou/et de manipulation de ladite composition pour ne pas conduire à un durcissement prématuré de la composition adhésive pendant la durée du stockage ou des minipulations de cette composition. Avantageusement, et surtout lorsque la vitesse de génération des radicaux libres par le système résultant de l'association du composé peroxydé et de l'activateur conduit à un durcissement rapide de la composition adhésive aux températures de stockage ou/et de manipulation de cette composition, seul le composé peroxydé ou le composé activateur est présent dans la composition adhésive, l'autre composé n'étant mis en contact avec la composition adhésive qu'au moment de la réalisation du collage comme il sera indiqué plus loin.

La quantité de générateur de radicaux libres présent dans la phase monomère peut varier assez largement selon la nature dudit générateur et celle des monomères à polymériser par voie radicalaire. Le plus souvent, ladite quantité représente de 0,1% à 5% et de préférence de 0,2% à 4% du poids des monomères à polymériser par voie radicalaire.

Lorsque le générateur de radicaux libres est un composé peroxydé utilisé en association avec un composé activateur, ledit composé activateur est employé en quantité comprise dans les limites indiquées pour la quantité du composé générateur de radicaux libres, c'est-à-dire de 0,1% à 5% et de préférence de 0,2% à 4% du poids des monomères à polymériser par voie radicalaire. Avantageusement le composé activateur est utilisé en quantité égale à ou voisine de celle qui correspond à la stoechiométrie de la réaction avec le composé générateur de radicaux libres.

En plus de ses constituants principaux, à savoir monomères acryliques et éventuellement monomères insaturés non acryliques, système précurseur de polyuréthanne, générateur de radicaux libres et éventuellement promoteur d'adhésion et activateur, la composition adhésive peut encore renfermer un ou plusieurs des additifs utilisés habituellement dans les compositions adhésives acryliques. Ces additifs peuvent être, en particulier, des accélérateurs de polymérisation, notamment saccharine, ortho-aminophénol, sels organiques métalliques tels que naphténate de cuivre ou de cobalt, des plastifiants et notamment phtalate de dibutyle, phtalate de dioctyle ou encore polyesters oligomères, des oligomères réactifs tels que les oligomères uréthanne/(méth) acrylate ou les oligomères polyester/(méth) acrylate, des colorants, des charges, des pigments, des agents mouillants, des agents épaississants minéraux comme la silice finement divisée ou polymériques comme les polymères acryliques et notamment les polyméthacrylates tels que polyméthylméthacrylates, des agents stabilisants et notamment des quinones ou hydroquinones ou des phénols comme le di-tertiobutyl-2,6 méthyl-4 phénol. Les additifs précités sont utilisés en quantités correspondant à celles généralement préconisées dans l'art.

La composition adhésive suivant l'invention peut se présenter sous la forme monocomposante ou sous la forme bicomposante. Dans sa forme monocomposante, la composition adhésive consiste en un mélange unique de tous les ingrédients qu'elle doit renfermer.

Cette forme monocomposante peut être retenue lorsque le générateur de radicaux libres est du type photoinitiateur ou du type composé peroxydé activable thermiquement. Lorsque les radicaux libres sont produits en associant un générateur de radicaux libres du type composé peroxydé avec un composé activateur, la forme monocomposante ne peut être retenue pour la composition adhésive que si la vitesse de génération des radicaux libres est insuffisante pour provoquer un durcissement prématuré de la composition adhésive aux températures de stockage de ladite composition ou/et aux températures de manipulation de cette composition aux fins de réalisation de collages. Dans sa forme bicomposante, qui est à retenir lorsque les radicaux libres sont produits en associant un générateur de radicaux libres du type composé peroxydé avec un composé activateur et surtout lorsque la vitesse de génération des radicaux libres provoquerait un durcissement de la composition adhésive aux températures de stockage de ladite composition ou/et aux températures de manipulation de cette composition aux fins de réalisation de collages, la composition adhésive se présente en deux parties. L'une des parties de ladite composition adhésive consiste en un mélange intime d'une fraction majoritaire ou de la totalité des monomères polymérisables par voie radicalaire avec tous les autres ingrédients, notamment les composantes du système précurseur de polyuréthanne, qui entre dans la préparation de la composition à l'exception soit du composé activateur ou bien du composé générateur de radicaux libres, tandis que l'autre partie de la composition adhésive consiste en un mélange intime, de préférence en une solution, du composé activateur ou générateur de radicaux libres restant dans, suivant le cas, le reste des monomères polymérisables par voie radicalaire ou un solvant volatil inerte.

La composition adhésive monocomposante ou chacune des parties de la composition adhésive bicomposante peut être préparée par toute méthode de mélangeage permettant de produire un mélange homogène stable des ingrédients utilisés pour sa préparation.

En particulier les composantes du système précurseur de polyuréthanne peuvent être ajoutées aux monomères acryliques soit séparément ou après qu'au moins deux d'entre elles aient été prémélangées.

La composition adhésive suivant l'invention est utilisable pour effectuer la liaison d'éléments variés et notamment d'éléments structuraux. Les éléments à lier ou à coller peuvent être en matériaux tels que métaux et notamment fer, acier, cuivre, aluminium, ou encore matières plastiques, matériaux composites, bois, verre, céramiques. Cette composition adhésive est en particulier adaptée pour lier entre eux des éléments structuraux constitués de tôles métalliques et notamment de tôles en acier, éventuellement galvanisées ou zinguées, ayant subi ou non un dégraissage.

Pour réalise une liaison entre deux éléments à l'aide de la composition adhésive du type monocomposante, on enduit la zone de la surface de l'un des éléments, où l'on désire former le joint de colle, à l'aide de la composition adhésive et sur la zone ainsi enduite, on applique la partie à coller correspondante de la surface du second élément. On maintient alors les deux éléments en contact en exerçant sur l'assemblage une pression appropriée, éventuellement avec augmentation de la température ou opération en présence d'un rayonnement ultra-violet si le générateur de radicaux libres est activable thermiquement ou par irradiation ultra-violette, jusqu'à l'obtention d'un durcissement suffisant du joint adhésif reliant les deux éléments.

Pour réaliser une liaison entre deux éléments à l'aide de la composition adhésive du type bicomposante, on enduit la zone de la surface de l'un des éléments, où l'on veut former le joint de colle, à l'aide de la partie de la composition adhésive renfermant le système générateur de radicaux libres et l'on revêt la partie à coller correspondante de la surface du second élément à l'aide de la partie de la composition adhésive renfermant l'activateur, puis l'on applique les zones ainsi enduites l'une sur l'autre et maintient les deux éléments en contact en exerçant sur l'assemblage une pression appropriée jusqu'à l'obtention d'un durcissement suffisant du joint de colle.

L'invention est illustrée par les exemples suivants donnés à titre non limitatif.

EXEMPLE 1 .

Dans une première série d'essais (essais 1.a.1 à 1.à.5), on preparait cinq formulations adhésives monocomposantes suivant l'invention, dont la composition est donnée en pourcentage en poids dans le tableau I ci-après.

TABLEAU I

| Essai | 1.a.1 | 1.a.2 | 1.a.3 | 1.a.4 | 1.a.5 |
|---|---|---|---|---|---|
| **Précurseur de polyuréthanne** | | | | | |
| . Polyétherdiol P 2000 [α)] | 6,6 | 13,2 | 19,8 | 26,4 | 33 |
| . Triméthylolpropane | 0,2 | 0,4 | 0,6 | 0,8 | 1 |
| . Dilaurate de dibutylétain | 0,2 | 0,4 | 0,6 | 0,8 | 1 |
| . Isocyanate polyfonctionnel [β)] | 3 | 6 | 9 | 12 | 15 |
| **Autres composantes** | | | | | |
| . Méthacrylate de méthyle | 70,2 | 62,4 | 54,6 | 46,8 | 39 |
| . Acide acrylique | 10,8 | 9,6 | 8,4 | 7,2 | 6 |
| . Diméthacrylate d'éthylène glycol | 2,7 | 2,4 | 2,1 | 1,8 | 1,5 |
| . Hydroperoxyde de cumène | 2,7 | 2,4 | 2,1 | 1,8 | 1,5 |
| . Activateur [γ)] | 3,6 | 3,2 | 2,8 | 2,4 | 2 |

α) - P 2000 : Polyoxypropylèle glycol de $\overline{M}n$ égale à 2000

β) - Adduct de toluènediisocyanate et de triméthylolpropane commercialisé par BAYER sous le nom DESMODUR L 75

γ) - Produit de condensation aniline/homologues de l'acroléine commercialisé par BAYER sous le nom de VULKACIT 576.

Chacune des formulations précitées était préparée en réalisant tout d'abord un mélange homogène des monomères acryliques et des polyols, puis en incorporant au mélange obtenu l'activateur, le dilaurate de dibutylétain et l'isocyanate polyfonctionnel.

Dans une deuxième série d'essais (essais 1.b.1 à 1.b.5) effectuée aux fins de comparaison, on préparait cinq formulations adhésives monocomposantes témoins, dont la composition est donnée en pourcentage en poids dans le tableau II, la formulation d'un essai quelconque 1.b.i (i=1,2,...5) de la deuxième série d'essais étant à comparer à la formulation de l'essai 1.a.i de la première série d'essais.

## TABLEAU II

| Essai témoin | 1.b.1 | 1.b.2 | 1.b.3 | 1.b.4 | 1.b.5 |
|---|---|---|---|---|---|
| . Polyuréthanne | 10 | 20 | 30 | 40 | 50 |
| . Méthacrylate de méthyle | 70,2 | 62,4 | 54,6 | 46,8 | 39 |
| . Acide acrylique | 10,8 | 9,6 | 8,4 | 7,2 | 6 |
| . Diméthacrylate d'éthylène glycol | 2,7 | 2,4 | 2,1 | 1,8 | 1,5 |
| . Hydroperoxyde de cumène | 2,7 | 2,4 | 2,1 | 1,8 | 1,5 |
| . Activateur (VULKACIT 576) | 3,6 | 3,2 | 2,8 | 2,4 | 2 |

Chacune des formulations témoins était préparée en mélangeant intimement les monomères acryliques et l'hydroperoxyde de cumène, puis en dissolvant le polyuréthanne dans le mélange résultant et enfin en incorporant l'activateur à la solution ainsi obtenue.

Le polyuréthanne mis en solution dans les monomères acryliques était préparé au préalable par polycondensation d'un milieu réactionnel renfermant, en poids, 66 parties de polyétherdiol P2000, 2 parties de triméthylolpropane, 2 parties de dilaurate de dibutylétain et la quantité stoechiométrique, par rapport aux polyols engagés, d'un isocyanate difonctionnel.

La dite préparation du polyuréthanne était effectuée en ajoutant l'isocyanate difonctionnel, à température ambiante, au polyétherdiol renfermant le triméthylolpropane et le dilaurate de dibutylétain, puis en portant le mélange réactionnel obtenu à 80C° et en maintenant ledit mélange à cette température pendant 1 heure pour que la polycondensation soit complète. Le polyuréthanne ainsi obtenu était substantiellement linéaire pour être soluble dans les monomères acryliques et non réactif.

Chaque formulation témoin différait donc de la formulation correspondante suivant l'invention par le fait qu'un polyuréthanne non réactif et substantiellement linéaire était dissous dans les monomères acryliques au lieu d'ajouter à ces derniers un système précurseur de polyuréthanne conduisant à un réseau polyuréthanne réticulé.

Les formulations adhésives monocomposantes obtenues dans les deux séries d'essais étaient utilisées pour effectuer des collages de stérigmes en acier dégraissés au trichloréthylène.

On réalisait des assemblages constitués de deux stérigmes ayant chacun 10cm de longueur, 2,5cm de largeur et 0,4mm d'épaisseur que l'on collait l'un à l'autre au moyen de la formulation adhésive. Pour produire lesdits assemblages, on enduisait l'un des faces d'un premier stérigme, préalablement dégraissée au trichloréthylène, d'une couche de la formulation adhésive et dégraissait au trichloréthylène l'une des faces d'un second stérigme, puis l'on appliquait l'une sur l'autre les faces ainsi traitées des deux stérigmes de manière à former un assemblage comportant un joint adhésif d'environ 1,25cm de longueur et laissait durcir le joint adhésif pendant 10 heures à température ambiante.

On déterminait ensuite la résistance au cisaillement du joint adhésif en soumettant les assemblages à un essai de traction cisaillement en suivant les prescriptions de la norme ASTM D 1002 - 72.

Pour les diverses formulations adhésives, on déterminait également le "temps de gel en pot", c'est-à-dire le temps au bout duquel la composition adhésive placée dans un tube calibré de 1,5cm de diamètre, ne s'écoule plus quand on retourne le tube. Ce "temps de gel en pot" représente approximativement le temps maximum de manipulation de la formulation adhésive avant gélification.

Dans le tableau III on a rassemblé, sous la forme d'une valeur moyenne sur dix mesures, les valeurs des grandeurs précitées, à savoir "temps de gel en pot" et résistance au cisaillement, déterminées pour les diverses formulations adhésives préparées dans chacune des première et deuxième séries d'essais.

0 279 725

## TABLEAU III

| Essai | Temps de gel en pot (heures) | Résistance au cisaillement (MPa) |
|---|---|---|
| 1.a.1 | > 10 | 13,5 |
| 1.b.1 | 1,3 | 1 |
| 1.a.2 | – | 11 |
| 1.b.2 | 0,5 | 7 |
| 1.a.3 | -- | 6 |
| 1.b.3 | 0,3 | 5,5 |
| 1.a.4 | 0,5 | 6 |
| 1.b.4 | 0,25 | 3,2 |
| 1.a.5 | 0,25 | 3,5 |
| 1.b.5 | 0,1 | 1,7 |

La comparaison des résultats figurant au tableau III fait ressortir que les formulations adhésives suivant l'invention conduisent, par rapport aux formulations adhésives témoins comparables, à une amélioration substantielle de la résistance au cisaillement du joint adhésif durci ainsi qu'à une augmentation du temps de gel en pot facilitant le stockage et les manipulations des formulations.

En outre, pour la formulation de l'essai 1.a.1 on a déterminé également le "temps de gel en joint adhésif", c'est-à-dire le temps au bout duquel la résistance au cisaillement en traction du joint adhésif, pour des assemblages réalisées comme indiqué ci-dessus, atteint une valeur égale à 5MPa, à partir de laquelle les assemblages peuvent être manipulés sans déformation même si le joint adhésif n'est pas complètement durci. La valeur obtenue pour ledit temps de gel en joint adhésif était égale à 3,3 heures.

### EXEMPLE 2 :

On préparait une série de formulations adhésives monocomposantes comme décrit dans l'essai 1.a.1 de l'exemple 1, en changeant toutefois, d'une formulation à l'autre, la nature du polyétherdiol sans en changer la quantité.

En utilisant les compositions adhésives ainsi obtenues et en opérant comme indiqué dans l'exemple 1, on formait des assemblages de stérigmes en acier, dégraissés au trichloréthylène, et soumettait lesdits assemblages à un essai de traction cisaillement suivant la norme ASTM D 1002-72 pour déterminer la résistance au cisaillement du joint de colle.

Les valeurs moyennes de la résistance au cisaillement du joint de colle, déterminées sur dix assemblages, sont données dans le tableau IV en fonction de la nature du polyétherdiol formant l'une des composantes du système précurseur de polyuréthanne.

8

0 279 725

## TABLEAU IV

| Polyétherdiol | | Résistance au cisaillement |
| --- | --- | --- |
| Nature | $\overline{Mn}$ | (MPa) |
| Polyoxypropylène glycol | 2 000 | 13,5 |
| Polyoxyéthylène glycol | 200 | 17 |
| | 10 000 | 15,5 |
| | 35 000 | 15,5 |

Toutes conditions égales par ailleurs, la cohésion du joint de colle durci et par la même, entre autres, sa résistance au cisaillement sont d'autant meilleures que les chaînes du polyétherdiol sont plus courtes.

EXEMPLE 3 :

On préparait une formulation adhésive monocomposante comme décrit dans l'essai 1.a.1 de l'exemple 1, en remplaçant toutefois le polyétherdiol par la même quantité d'un polyesterdiol ayant une masse moléculaire moyenne en nombre ( $\overline{Mn}$) égale à 1700, ledit polyesterdiol résultant de la réaction d'acide adipique sur l'éthylène glycol en présence d'anhydride phtalique.

En utilisant la composition adhésive ainsi préparée et en opérant comme indiqué dans l'exemple 1, on formait des assemblages de stérigmes en acier, dégraissés au trichloréthylène, et soumettait lesdits assemblages à l'essai de traction cisaillement pour déterminer la résistance au cisaillement du joint de colle.

La valeur moyenne de ladite résistance au cisaillement, déterminée sur dix assemblages, était égale à 15,5 MPa contre 13,5 MPa pour la formulation de l'essai 1.a.1 de l'exemple 1. Il apparaît donc que le remplacement du polyétherdiol par un polyesterdiol de masse moléculaire n comparable, conduit à une légère augmentation de la résistance au cisaillemnt du joint de colle.

EXEMPLE 4 :

On préparait trois formulations adhésives monocomposantes comme décrit dans l'essai 1.a.1 de l'exemple 1, en changeant toutefois, d'une formulation à l'autre, la nature de l'isocyanate polyfonctionnel sans en changer la quantité.

En utilisant les compositions adhésives ainsi préparées et en opérant comme indiqué dans l'exemple 1, on formait des assemblages de stérigmes en acier, dégraissés au trichloréthylène, et soumettait lesdits assemblages à l'essai de traction cisaillement pour déterminer la résistance au cisaillement du joint de colle.

Les valeurs moyennes des résistances au cisaillement obtenues, déterminées sur dix assemblages, sont données dans le tableau V en fonction de la nature de l'isocyanate polyfonctionnel formant l'une des composantes du système précurseur de polyuréthanne.

9

## TABLEAU V

| Isocyanate polyfonctionnel | | Résistance au cisaillement |
|---|---|---|
| Désignation | Nature | (MPa) |
| . DESMODUR L 75 | prépolymère aromatique | 13,6 |
| . Toluène diisocyanate | aromatique | 13 |
| . Isophorone diisocyanate | cycloaliphatique | 14 |

La nature de l'isocyanate polyfonctionnel utilisé dans la formulation adhésive n'a pas d'effet sensible sur la résistance au cisaillement du joint de colle formé à partir de ladite formulation.

EXEMPLE 5 :
Dans un premier essai (5.a.1), on préparait une formulation adhésive monocomposante comme indiqué dans l'essai 1.a.1 de l'exemple 1 en remplaçant toutefois l'acide acrylique par la même quantité d'acide méthacrylique.

Dans un second essai (5.a.2), on préparait une formulation adhésive monocomposante comme indiqué dans l'essai 1.a.1 de l'exemple 1 avec toutefois remplacement de l'acide acrylique par la même quantité de méthacrylate de méthyle.

En utilisant les compositions adhésives ainsi préparées et en opérant comme indiqué dans l'exemple 1, on formait des assemblages de stérigmes en acier, dégraissés au trichloréthylène, et soumettait lesdits assemblages à l'essai de traction cisaillement pour déterminer la résistance au cisaillement du joint de colle.

Les valeurs moyennes des résistances au cisaillement obtenues, déterminées sur dix assemblages, sont données dans le tableau VI, ledit tableau renfermant également la valeur moyenne de résistance au cisaillement obtenue dans l'essai 1.a.1 de l'exemple 1.

## TABLEAU VI

| Essai | Monomère acrylique acide présent dans la formulation | Résistance au cisaillement (MPa) |
|---|---|---|
| 1.a.1 | Acide acrylique | 13,5 |
| 5.a.1 | Acide méthacrylique | 7,5 |
| 5.a.2 | Aucun | 6,5 |

La présence d'un monomère acrylique à groupement carboxylique libre dans la formulation adhésive conduit à une augmentation de la réactivité et à une amélioration de l'adhésivité se traduisant par une augmentation de la résistance au cisaillement du joint de colle. L'adhésion est très fortement améliorée lorsque le monomère acrylique acide est l'acide acrylique.

EXEMPLE 6 :
En utilisant la formulation adhésive monocomposante préparée comme décrit dans l'esai 1.a.1 de l'exemple 1, on formait des assemblages comme indiqué dans ledit exemple en partant soit de stérigmes en acier dégraissés à l'acétone ou de stérigmes en acier non dégraissés, puis on soumettait les assemblages obtenus à l'essai de traction cisaillement pour déterminer la résistance au cisaillement du joint de colle.

Les valeurs moyennes de résistance au cisaillement déterminées sur dix assemblages, étaient égales à 13,5 MPa pour les assemblages réalisés à partir des stérigmes dégraissés et à 13 MPa pour les assemblages formés à partir des stérigmes non dégraissés.

EXEMPLE 7 :

On préparait une série de formulations adhésives monocomposantes épaissies à partir de 100 parties en poids de la formulation définie dans l'essai 1.a.1 de l'exemple 1 et de quantités variables d'un agent épaississant consistant soit en un polyméthacrylate de méthyle ayant une masse moléculaire en poids égale à $10^6$ environ et une température de transition vitreuse de 91°C ou en une silice finement divisée commercialisée sous le nom de Cab O Sil, type M-5, ladite silice ayant une dimension de particules d'environ 0,012 microns.

Les formulations épaissies étaient obtenues comme suit. On réalisait tout d'abord un mélange homogène de l'agent épaississant dans environ 1/3 du méthacrylate de méthyle entrant dans la composition de la formulation de l'essai 1.a.1. On préparait ensuite une formulation adhésive analogue à la formulation dudit essai avec le reste du méthacrylate de méthyle et les autres ingrédients en suivant le mode opératoire donné dans l'exemple 1. A la formulation ainsi préparée, on ajoutait alors le mélange agent épaississant/méthacrylate de méthyle dans des conditions appropriées d'agitation pour obtenir une formulation épaissie homogène.

Les formulations épaissies obtenues étaient utilisées pour effectuer des collages de stérigmes en acier dégraissés au trichloréthylène avec une épaisseur de joint importante, spécialement adaptée pour les collages dans l'industrie automobile.

On réalisait des assemblages constituées de deux stérigmes ayant les dimensions données dans l'exemple 1, que l'on collait l'un à l'autre au moyen de la formulation adhésive. Pour produire lesdits assemblages on opérait comme décrit dans l'exemple 1 en séparant toutefois les faces à coller en regard des deux stérigmes par deux cales en polytétrafluoroéthylène de 0,2 mm d'épaisseur, de manière à former un assemblage comportant un joint adhésif d'épaisseur calibrée égale à 0,2 mm et d'environ 1,25 cm de longueur, cette épaisseur calibrée correspondant à celle des joints de certains collages réalisés dans l'industrie automobile.

On déterminait ensuite la résistance au cisaillement du joint adhésif en soumettant les assemblages à l'essai de traction cisaillement, la vitesse de déplacement des mors de l'appareil de traction étant dans ce cas égale à 10 mm/minute au lieu de 1,33 mm/mn dans l'essai suivant la norme ASTM précitée.

Les valeurs moyennes de la résistance au cisaillement pour les diverses formulations épaissies, déterminées sur dix assemblages, sont données dans le tableau VII.

## TABLEAU VII

| Agent épaississant | | Résistance au cisaillement | Viscosité de la formulation |
|---|---|---|---|
| Nature | Quantité *) | (MPa) | (Pa.s) |
| Polyméthacrylate de méthyle | 14,5 | 14,5 | 11,3 |
| | 7 | 10 | |
| | 3,5 | 11,5 | |
| Silice | 4,7 | 15 | 0,2 |

*) :   parties pondérales pour 100 parties de la formulation de l'essai 1.a.1

EXEMPLE 8 :

On préparait une formulation adhésive bicomposante suivant l'invention, dont la composition est donnée ci-après en parties en poids.

- Composante A :
. Polyétherdiol P 2000 :    6,6
. Triméthylolpropane :    0,2

. Dilaurate de dibutylétain :   0,2
. Isocyanate polyfonctionnel (DESMODUR L 75):   3
. Méthacrylate de méthyle :   50,2
. Acide acrylique :   10,8
. Diméthacrylate d'éhylène glycol :   2,7
. Hydroperoxyde de cumène :   2,7
. Hydroquinone :   0,1

- Composante B
. Méthacrylate de méthyle :   20,2
. Activateur (VULKACIT 576) :   3,6

La composante A était préparée en suivant le mode opératoire défini pour la préparation de la formulation monocomposante de l'essai 1.a.1 de l'exemple 1. La composante B était obtenue par dissolution de l'activateur dans le méthacrylate de méthyle.

Après un mois de stockage à température inférieure à 25°C, aucune des composantes A et B n'avait changé d'aspect.

La formulation bicomposante était utilisée pour effectuer des collages de stérigmes en acier dégraissés au trichloréthylène, lesdits stérigmes ayant les dimensions définies dans l'exemple 1.

Dans un premier essai (8.a.1), les composantes A et B étaient mélangées pour constituer une formulation adhésive monocomposante, cette dernière étant utilisée pour réaliser des assemblages de stérigmes comme indiqué dans l'exemple 1.

Dans un deuxième essai (8.a.2), la formulation bicomposante était utilisée en tant que système adhésif bicomposante pour coller les stérigmes. Dans une telle forme de mise en oeuvre, on réalisait les assemblages constitués de deux stérigmes en opérant comme suit. On enduisait l'une des faces d'un premier stérigme, préalablement dégraissée au trichloréthylène, d'une couche de la composante A et revêtait l'une des faces d'un second stérigme, également dégraissée au trichloréthylène, à l'aide d'une couche uniforme de la composante B, puis l'on appliquait l'une sur l'autre les faces ainsi enduites des deux stérigmes de manière à former un assemblage comportant un joint adhésif d'environ 1,25 cm de longueur et laissait durcir le joint à température ambiante.

Les assemblages obtenus dans l'un ou l'autre des essais étaient soumis à l'essai de traction cisaillement pour déterminer la résistane au cisaillement du joint adhésif.

On donne dans le tableau VIII, en fonction du temps, la valeur moyenne de la résistance au cisaillement du joint adhésif, déterminée sur dix assemblages, pour chacun des modes d'utilisation de la formulation adhésive.

## TABLEAU VIII

| Temps (Heures) | Résistance au cisaillement (MPa) | |
| --- | --- | --- |
| | Utilisation en système monocomposante (essai 8.a.1) | Utilisation en système bicomposante (essai 8.a.2) |
| 0,5 | 0,2 | 0,4 |
| 1 | | 0,8 |
| 1,3 | 0,2 | 0,9 |
| 1,5 | | 1 |
| 3,4 | 1,2 | 2,2 |
| 5 | 9,4 | 10,6 |
| 10 | 12 | 12,5 |

EXEMPLE 9 :

On préparait une formulation adhésive bicomposante épaissie, dont la composition est donnée ci-après en parties en poids.

- Composante A :
. Polyétherdiol P 2000 :        6,6
. Triméthylolpropane :          0,2
. Dilaurate de dibutylétain :       0,2
. Isocyanate (DESMODUR L 75) :      3
. Méthacrylate de méthyle :         65,2
. Acide acrylique :             10,8
. Diméthacrylate d'éhylène glycol :     2,7
. Agent épaississant (polyméthacrylate de méthyle de l'exemple 7) :     10
. Hydroperoxyde de cumène :         2,7
. Hydroquinone :                1

- Composante B
. Méthacrylate de méthyle :         5
. Activateur (VULKACIT 576) :       3,6

La composante A de la formulation était préparée comme suit. On réalisait tout d'abord un mélange homogène de l'agent épaississant dans environ 1/3 du méthacrylate de méthyle entrant dans la composition de la composante A. On mélangeait ensuite le reste du méthacrylate de méthyle de ladite composante avec les autres ingrédients qu'elle renferme en suivant le mode opératoire donné dans l'exemple 1, l'hydroquinone étant ajoutée en fin d'opération. A la formulation ainsi préparée, on ajoutait alors le mélange agent épaississant/méthacrylate de méthyle dans des conditions d'agitation propres à fournir une formulation épaissie homogène.

La composante B était obtenue par simple dissolution de l'activateur dans le méthacrylate de méthyle.

La formulation adhésive bicomposante obtenue était utilisée pour effectuer des collages de stérigmes en acier dégraissés au trichloréthylène en réalisant les assemblages de stérigmes comme indiqué dans l'essai 8.a.2 de l'exemple 8 avec en outre formation d'un joint adhésif d'épaisseur calibrée égale à 0,2 mm.

Les assemblages ainsi formés étaient soumis à l'essai de traction cisaillement pour déterminer la résistance au cisaillement du joint de colle, la vitesse de déplacement des mors de l'appareil de traction étant, comme dans l'exemple 7, égale à 10 mm/minute.

La valeur moyenne de ladite résistance au cisaillement, déterminée sur dix assemblages, était égale à 10 MPa.

EXEMPLE 10 :

En utilisant un mode opératoire analogue à celui employé pour produire les formulations adhésives de la série a de l'exemple 1, on préparait une formulation adhésive monocomposante ayant la composition donnée ci-après en parties en poids.
. Polyétherdiol P 2000 :        7,5
. Triméthylolpropane :          0,2
. Dilaurate de dibutylétain :       0,3
. Isocyanate polyfonctionnel (DESMODUR L 75) :     4,5
. Méthacrylate de méthyle :     46,8
. Méthacrylate d'hydroxyéthyle: 23,4
. Acide acrylique :             10,8
. Diméthacrylate d'éthylène glycol :    2,7
. Hydroperoxyde de cumène :         3,6
. Activateur (VULKACIT 576) :       3,6

En utilisant la composition adhésive ainsi préparée et en opérant comme indiqué dans l'exemple 1, on formait des assemblages de stérigmes en acier, dégraissés au trichloréthylène, et soumettait lesdits assemblages à l'essai de traction cisaillement pour déterminer la résistance au cisaillement du joint de colle.

La valeur moyenne de ladite résistance au cisaillement, déterminée sur dix assemblages, était égale à 13 MPa. Après vieillissement thermique des assemblages pendant 1 heure à 220°C la résistance au cisaillement du joint de colle avait encore une valeur moyenne égale à 8,7 MPa.

**Revendications**

1 - Composition adhésive acrylique présentant après durcissement une résistance améliorée au choc et au cisaillement, du type comportant une phase acrylique monomère renfermant un ou plusieurs monomères monoacryliques et jusqu'à 10 %, en poids de ladite phase, d'un ou plusieurs esters pluriacryliques et, en mélange intime avec la phase monomère, un générateur de radicaux libres ainsi

13

qu'un adjuvant d'amélioration de la résistance au choc de la compostion adhésive durcie, et se caractérisant en ce que ledit adjuvant consiste en un réseau polyuréthanne réticulé formé in situ au sein de la phase acrylique monomère à partir d'un système précurseur de polyuréthanne mis en solution dans ladite phase monomère, ledit système précurseur étant utilisé à raison de 3 à 60 % du poids de la phase acrylique monomère et étant formé d'un ou plusieurs isocyanates organiques polyfonctionnels et d'un ou plusieurs polyols, qui sont solubles chacun dans la phase acrylique monomère et sont choisis de telle sorte que ce système précurseur renferme au moins un isocyanate possédant au moins trois fonctions isocyanates ou/et un polyol ayant au moins trois fonctions hydroxyles pour conduire au polyuréthanne réticulé sans séparation de phases.

2 - Composition adhésive selon la revendication 1, caractérisée en ce que le système précurseur de polyuréthanne est utilisé en quantité représentant 5 à 25 % du poids de la phase acrylique monomère.

3 - Composition adhésive selon la revendication 1 ou 2, caractérisée en ce que les polyols entrant dans la composition du système précurseur de polyuréthanne ont des masses moléculaires moyennes en nombre comprises entre 60 et 200.000.

4 - Composition adhésive selon l'une des revendications 1 à 3, caractérisée en ce que les isocyanates organiques polyfonctionnels associés aux polyols pour constituer le système précurseur de polyuréthanne sont choisis parmi les isocyanates organiques possédant au moins deux groupements isocyanates dans la molécule et ayant une masse moléculaire inférieure à 5000, lesdits isocyanates étant en particulier du type aliphatique acyclique ou cyclique ou du type aromatique.

5 - Composition adhésive selon l'une des revendications 1 à 4, caractérisée en ce que le système précurseur de polyuréthanne est formé en associant un ou plusieurs isocyanates organiques consistant en partie ou en totalité en un ou plusieurs isocyanates renfermant au moins trois fonctions isocyanates à un ou plusieurs diols ou à un mélange d'un ou plusieurs diols et d'un ou plusieurs polyols renfermant au moins trois fonctions hydroxyles, la quantié du ou desdits polyols au moins trifonctionnels représentant au plus 60 % et de préférence entre 0,5 et 15 % du poids global du ou des diols du mélange.

6 - Composition adhésive selon l'une des revendications 1 à 4, caractérisée en ce que le système précurseur de polyuréthanne est formé en associant un ou plusieurs diisocyanates à un mélange d'un ou plusieurs diols et d'un ou plusieurs polyols renfermant au moins trois fonctions hydroxyles, la quantité globale du ou desdits polyols au moins trifonctionnels représentant au plus 60 % et de préférence 0,5 et 15 % du poids global du ou des diols du mélange.

7 - Composition adhésive selon la revendication 5 ou 6, caractérisée en ce que les diols présents dans le système précurseur de polyuréthanne sont choisis parmi les polyétherdiols et les polyesterdiols ayant des masses moléculaires moyennes en nombre comprises entre 100 et 200 000 et de préférence entre 200 et 50 000.

8 - Composition adhésive selon l'une des revendications 1 à 7, caractérisée en ce que le système précurseur de polyuréthanne renferme un catalyseur choisi parmi les composés organiques métalliques ayant un caractère d'acide de Lewis et notamment parmi les composés organiques de l'étain.

9 - Composition adhésive selon l'une des revendications 1 à 8, caractérisée en ce que le catalyseur du système précurseur de polyuréthanne est utilisé en quantité allant de 0,1 à 5 % et de préférence de 0,5 à 3 % du poids global du ou des polyols et du ou des isocyanates dudit système précurseur.

10- Composition adhésive selon l'une des revendications 1 à 9, caractérisée en ce que la quantité globale de l'ester ou des esters pluriacryliques présents dans la phase acrylique monomère représente 0,5 à 5 % du poids de ladite phase.

11 - Composition adhésive selon la revendication 10, caractérisée en ce que la phase acrylique monomère renferme, outre les monomères acryliques, un ou plusieurs monomères insaturés non acryliques polymérisables par voie radicalaire et exempts de groupements carboxyliques libres, la proportion de ces monomères non acryliques n'excèdant pas 20 % du poids global de la phase monomère.

12 - Composition adhésive selon l'une des revendications 1 à 11, caractérisée en ce qu'elle renferme un ou plusieurs promoteurs d'adhésion en solution.

13 - Composition adhésive selon la revendication 12, caractérisée en ce qu'une fraction des monomères formant la phase acrylique monomère est constituée d'un ou plusieurs acides insaturés monocarboxyliques ou polycarboxyliques polymérisables par voie radicalaire jouant, entre autres, le rôle de promoteurs d'adhésion, ladite fraction représentant avantageusement environ 1 à 80 % et de préférence 5 à 50 % du poids de la phase acrylique monomère.

14 - Composition adhésive selon l'une des revendications 1 à 13, caractérisée en ce que le générateur de radicaux libres, qui est présent dans la composition, consiste en un photoinitiateur, éventuellement associé à un photosensibilisateur, ledit générateur fournissant des radicaux libres sous l'action d'un rayonnement ultra-violet.

15 - Composition adhésive selon l'une des revendications 1 à 13, caractérisée en ce que le générateur de radicaux libres est un composé peroxydé ou un composé du type azobisnitrile, ledit générateur fournissant des radicaux libres soit par activation thermique ou/et par association avec un composé activateur.

16 - Composition adhésive selon l'une des revendications 1 à 15, caractérisée en ce que la quantité de générateur de radicaux libres représente de 0,1 à 5 % et de préférence de 0,2 à 4 % des monomères insaturés à polymériser.

17 - Composition adhésive selon l'une des revendications 1 à 16, caractérisée en ce qu'elle renferme également des additifs tels que plastifiants, accélérateurs de polymérisation, oligomères réactifs du type uréthanne/(méth) acrylate ou polyester/(méth) acrylate, colorants, pigments, charges, agents mouillants, agents épaississants minéraux et notamment silice finement divisée ou polymériques et notamment polymères acryliques tels que polyméthacrylates d'alcoyle, agents stabilisants.

18 - Composition adhésive selon l'une des revendications 1 à 17, caractérisée en ce qu'elle se présente sous la forme monocomposante, c'est-à-dire sous la forme d'un mélange intime de tous les ingrédients entrant dans sa composition, y compris l'activateur lorsqu'il est utilisé.

19 - Composition adhésive selon la revendication 15, pour laquelle le générateur de radicaux libres est associé à un activateur pour produire les radicaux libres, caractérisée en ce qu'elle se présente sous la forme bicomposante, l'une des composantes étant constituée d'un mélange intime d'une fraction majoritaire ou de la totalité des monomères polymérisables par voie radicalaire avec tous les autres ingrédients entrant dans la composition de ladite composition adhésive à l'exception soit du composé activateur ou bien du générateur de radicaux libres, tandis que l'autre composante consiste en un mélange intime, de préférence en une solution, du composé activateur ou du générateur de radicaux libres non encore utilisé dans, suivant le cas, la fraction restante des monomères polymérisables par voie radicalaire ou un solvant volatil inerte.

20 - Application de la composition adhésive selon l'une des revendications 1 à 19, à la liaison d'éléments et notamment d'éléments structuraux.

21 - Application selon la revendication 20, caractérisée en ce que les éléments, dont la liaison est assurée à l'aide de la composition adhésive, sont en matériaux tels que métaux, matières plastiques, matériaux composites, bois , verre, céramiques.

22 - Application selon la revendication 21, caractérisée en ce que les éléments, dont la liaison est assurée à l'aide de la composition adhésive, sont des tôles métalliques ayant subi ou non un dégraissage.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 033 359 (HITACHI)<br>* Revendications 1,3,5; page 9, paragraphe 4; page 11, paragraphe 2; page 13, paragraphe 2 - page 14, paragraphe 2; page 15, paragraphe 3 *<br>--- | 1,3,4, 10,14, 16-18, 20-22 | C 08 G 18/63<br>C 09 J 3/14<br>C 09 J 3/16 |
| X | EP-A-0 154 819 (TAKEDA)<br>* Revendications 1,3-5; page 6, lignes 6-11; page 6, ligne 32 - page 7, ligne 22; page 9, ligne 1 - page 10, ligne 11; page 13, lignes 29-36; page 16, lignes 20-23 *<br>--- | 1-5,12, 14,16-22 | |
| A | FR-A-1 111 524 (BAYER)<br>* Résumé; page 1, colonne de gauche, dernier paragraphe - page 2, colonne de gauche, paragraphe 7; exemple 3 *<br>--- | 1 | |
| A | FR-A-2 349 609 (TEXACO)<br>* Revendications 1-7,10,11; page 3, lignes 13-19; page 4, lignes 3-9; page 5, lignes 14-21; page 6, lignes 32-36; page 7, lignes 13-29; page 11, lignes 12-16 *<br>--- | 1 | DOMAINES TECHNIQUES RECHERCHES (Int. Cl.4)<br><br>C 08 G<br>C 09 J |
| A | FR-A-1 572 362 (SOCIETE NOVACEL)<br>* Résumé, points 1,2d,2e; page 2, lignes 1-21 *<br>--- | 1 | |
| A | FR-B-2 029 560 (BASF)<br>* Revendications 1,8,11; page 5, ligne 36 - page 6, ligne 2 *<br>---    -/- | 1,5,12 | |

Le présent rapport a été établi pour toutes les revendications

| Lieu de la recherche | Date d'achèvement de la recherche | Examinateur |
|---|---|---|
| LA HAYE | 10-05-1988 | VAN PUYMBROECK M.A. |

Office européen
des brevets

**RAPPORT DE RECHERCHE EUROPEEŃNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-B-2 029 469 (I.C.I.) <br> * Revendications 1-5,15-17; page 7, ligne 34 - page 8, ligne 11; page 13, ligne 21 - page 14, ligne 14; page 15, lignes 10-34; page 19, lignes 22-26; exemple 28 * <br> ----- | 1-4,8-10,15-17 | |
| | | | **DOMAINES TECHNIQUES RECHERCHES (Int. Cl.4)** |

Le présent rapport a été établi pour toutes les revendications

| Lieu de la recherche | Date d'achèvement de la recherche | Examinateur |
|---|---|---|
| LA HAYE | 10-05-1988 | VAN PUYMBROECK M.A. |